# EUROPÄISCHE PATENTANMELDUNG

(11) **EP 0 576 817 A1**
(43) Veröffentlichungstag der Anmeldung: **05.01.1994**
(21) Anmeldenummer: 93107952.9
(22) Anmeldetag: 15.05.1993
(51) Int. Cl.: G05D 11/03, B01F 15/00, B05B 12/00, B01D 47/06

(54) **Verfahren und Vorrichtung zur Zufuhr von Gas und Flüssigkeit zu einer Zweistoffdüse**

(30) Priorität: 27.06.1992 DE 4221155
(71) Anmelder: Lechler GmbH & Co.KG, D-7012 Fellbach (DE)
(72) Erfinder: Bendig, Lothar, W-7417 Pfullingen (DE); Landvatter, Klaus, W-7056 Weinstadt (DE); Gaa, Reinhard, W-7430 Metzingen (DE); Seeger, Hans, W-7053 Kernen-Rommelshausen (DE)
(74) Vertreter: Wilhelm & Dauster Patentanwälte European Patent Attorneys

(57) **Zusammenfassung**

Es wird ein Verfahren und eine Vorrichtung zur Zufuhr von Gas und Flüssigkeit zu einer Zweistoffdüse beschrieben, bei denen der Druck in der Zuführung eines der beiden Fluide gemessen und als Maß für die Steuerung des Volumenstromes in der Zuführung des anderen Fluides dient. Vorteilhaft wird dabei der Druck in der Flüssigkeitszufuhr gemessen.

Durch diese Ausgestaltung kann das Mischungsverhältnis zwischen Gas und Flüssigkeit auch bei Veränderung der gesamten zu zerstäubenden Menge immer konstant bzw. auf einer gewünschen Kennlinie gehalten werden.

## Beschreibung

Die Erfindung betrifft eine Vorrichtung zur Zufuhr von Gas und Flüssigkeit zu einer Zweistoffdüse, insbesondere zur Zerstäubung von Flüssigkeiten nach dem Oberbegriff des Patentanspruchs.

Aus der DE 33 25 741 C1 ist eine Zweistoff-Zerstäubungsdüse bekannt, der einerseits die zu zerstäubende Flüssigkeit, zum anderen aber auch das die Zerstäubung bewirkende Gas, z.B. Luft in einem bestimmten Druck- und Mischungsverhältnis zugeführt wird. Mit solchen Zerstäubungsdüsen sollen bestimmte Tröpfchengrößen für die zu zerstäubende Flüssigkeit erreicht werden. Dies setzt das erwähnte bestimmte Mischungsverhältnis und Druckniveau zwischen Gas und Flüssigkeit voraus. Die Gas- und Flüssigkeitszufuhr erfolgt dabei wie bei den bekannten Verfahren und Vorrichtungen. Zunächst wird der Flüssigkeitsdruck zur Erzielung der gewünschten, zu zerstäubenden Flüssigkeitsmenge eingestellt und daran angepaßt die zuströmende Gasmenge in ihrem Volumenstrom so bemessen, daß die gewünschte Tropfengröße erreicht wird. Bei einer Reihe von Zerstäubungsvorgängen bleibt jedoch die für die Zerstäubung vorgesehene Flüssigkeitsmenge nicht konstant. Wird daher der Druck der zuströmenden Flüssigkeit geringer eingestellt, so führt dies in der Regel dazu, daß sich bei Düsen mit Innenmischung die zuströmende Gasmenge erhöht und allgemein bei Zweistoffdüsen zumindest das Luft-/Wasserverhältnis steigt, was zu einem an sich unnützen Gasverbrauch führt und unter Umständen auch zur Veränderung der gewünschten Tröpfchengröße führen kann.

Aus der DE 38 22 835 A1 sind ein Verfahren und eine Anordnung zum Lackieren von Werkstückoberflächen bekannt, wobei der der Spritzpistole zusätzlich zum Lack zugeführte Zerstäuber- und/oder Hornluftstrom gemessen und durch Verstellung des Strömungswiderstandes auf der betreffenden Strömungsstrecke nach Maßgabe seiner Abweichung vom momentanen Einstellwert nachgeführt wird. Ausgehend von diesen Werten kann zur weiteren Verbesserung der Oberflächenqualität der Zerstäuber- und/oder Hornluftstrom zusätzlich in Abhängigkeit vom gemessenen oder vorgegebenen Lackfluß nachgeführt werden.

Es ist daher die Aufgabe der vorliegenden Erfindung, eine Vorrichtung der eingangs genannten Art vorzuschlagen, mit der auf einfache Weise eine Anpassung der jeweiligen Luftmenge an die zu zerstäubende Flüssigkeitsmenge möglich ist.

Zur Lösung dieser Aufgabe wird bei einer Vorrichtung der eingangs genannten Art als Druckaufnehmer eine elastische Membran vorgesehen, die mechanisch mit einem das Durchflußventil steuernden Ventilstößel verbunden ist. Diese Ausführung ist besonders einfach und es wird lediglich notwendig, daß der Druck des Gases vor dem Durchflußventil stets konstant gehalten wird. Durch die neue Vorrichtung lassen sich bestimmte Kennlinien der Zerstäuberdüse einstellen.

Durch eine solche Vorrichtung kann das Mischungsverhältnis zwischen Gas und Flüssigkeit auch bei Veränderung der gesamten zerstäubten Menge immer konstant bzw. auf einer gewünschten Kennlinie gehalten werden. Der Gas- bzw. Luftverbrauch von Zweistoffdüsen, der unter Umständen mit sehr hohen Kosten verbunden sein kann, ist daher nicht höher, als es für die Zerstäubung einer vorgegebenen Flüssigkeitsmenge und für die gewünschte Tropfengröße erforderlich ist.

Die Erfindung ist in der Zeichnung anhand eines Ausführungsbeispieles dargestellt und wird im folgenden erläutert. Es zeigen:
- Fig. 1: ein schematisches Schaubild einer erfindungsgemäßen Vorrichtung zur Zufuhr von Gas und Flüssigkeit zu einer Zerstäubungsdüse nach dem erfindungsgemäßen Verfahren, und
- Fig. 2: eine Detaildarstellung der bei der Vorrichtung der Fig. 1 verwendeten erfindungsgemäßen Membranregeleinrichtung.

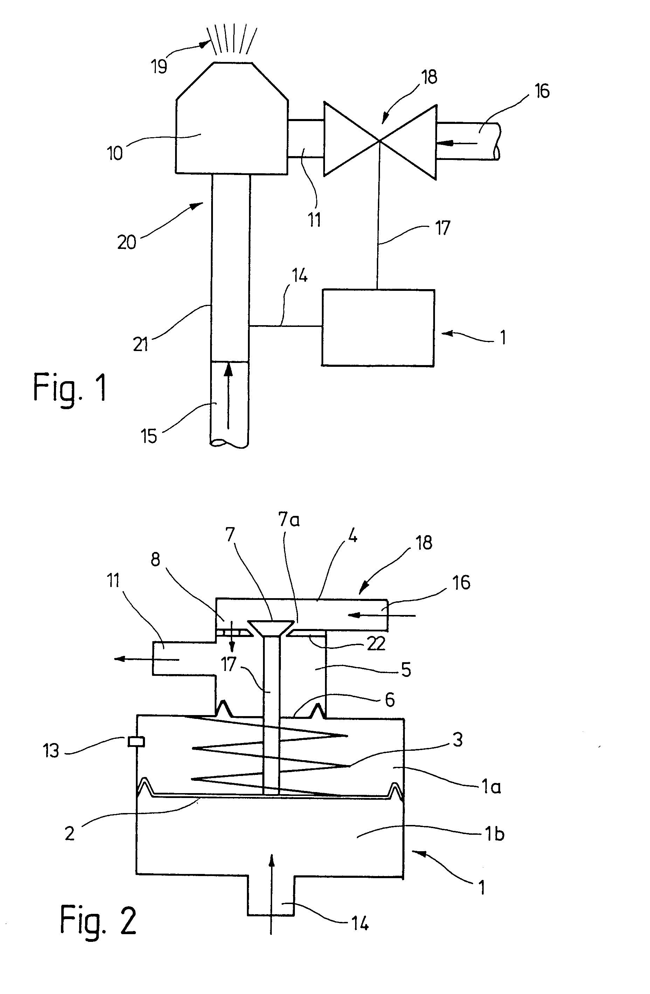

In der Fig. 1 ist schematisch eine Zweistoffdüse (20) gezeigt, die zur Zerstäubung von Wasser dient. Zu diesem Zweck wird über eine Zuführleitung (15) in die nicht näher dargestellte Mischkammer (10) der Zweistoffdüse (20) Wasser unter einem bestimmten Druck eingeleitet, wobei hier auch eine Zweistoffdüse mit Außenmischung gemeint sein kann. Über die Zuführleitung (16), ein Durchflußventil (18) und den Anschluß (11) wird die notwendige Zerstäubungsluft der Mischkammer (10) zugeführt. Der Volumenstrom der Luft soll dabei so gewählt sein, daß die Gesamtmenge des zugeführten Wassers in feine Tröpfchen zerstäubt wird und den gewünschten Zerstäubungsstrahl (19) ergibt.

In die Zuführleitung (15) bzw. in den mit dieser in Verbindung stehenden Anschlußteil (21) der Zweistoffdüse (20) mündet eine Stichleitung (14), die zu einer Membrandruckdose (1) führt, welche wiederum über eine anhand der Fig. 2 noch zu erläuternde Verbindung (17) das Durchflußventil (18) steuert. In der Zweistoffdüse (20) können daher Wasser und Luft oder auch zwei andere Fluide zusammengeführt, gemischt werden und als Zerstäubungsstrahl austreten.

Zweck der in der Fig. 1 und 2 dargestellten Einrichtung ist es dabei, das Mischungsverhältnis der beiden Fluide, beim Ausführungsbeispiel Wasser und Luft, nur durch Regelung des Druckes eines der beiden Fluide, beim Ausführungsbeispiel des Druckes in der Wasserzuführung zu steuern.

Fig. 2 zeigt, daß die Stichleitung von der Zuführleitung (15) in einer Kammer (1b) der Membrandruckkammer (1) mündet. Diese Kammer (1b) ist durch eine bewegliche Membran (2) begrenzt und diese Membran (2) wird durch eine Druckfeder (3) jeweils in Richtung zu der Kammer (1b) gedrückt. An die Kammer (1b) grenzt eine weitere Kammer (1a) an, in der sich auch die Druckfeder (3) befindet. Diese Kammer ist durch eine Belüftungsöffnung (13) mit der Umgebungsatmosphäre verbunden. Diese Belüftungsöffnung kann zum Zweck der Filterung und der Dämpfung auch mit einem Einsatz aus einem porösen oder faserigen Material versehen werden.

Am anderen Ende wird die Kammer (1a) durch eine weitere Membran (6) abgeschlossen, deren Fläche aber deutlich kleiner ist als die Fläche der Membran (2). An diese Membran (6) schließt sich eine Kammer (5) an. In dieser Kammer (5) befindet sich die Austrittsöffnung und der Anschluß (11) zur Mischkammer (10). Diese Kammer wiederum ist von einer Kammer (4) durch eine starre Wand (22) getrennt, in der sich eine Ventilöffnung (7a) und eine Bypass-Öffnung (8) befindet. In die Kammer (4) tritt die Luft durch den Anschluß (16) ein.

Die beiden Membranen (2 und 6) sind fest mit einem Ventilstößel (17) verbunden, der oben mit einem, mit der Öffnung (7a) korrespondierenden Ventilverschluß (7) versehen ist.

Fehlt daher der Druck des Wassers in der Zuleitung (15), so wird die Membran (2) und der Stößel (17) mit dem Verschluß (7) nach unten in Richtung zur Kammer (1b) gedrückt, bis der Verschluß (7) die Öffnung (7a) vollständig abdeckt. Luft kann daher über den Anschluß (16) nur durch die Bypass-Öffnung (8) von der Kammer (4) in die Kammer (5) und von dort zum Anschluß (11) hindurchtreten.

Die Arbeitsweise dieser Einrichtung ist wie folgt:
Zunächst ist Voraussetzung, daß in der Zuführleitung (16) für die Luft der Druck konstant gehalten wird. Dies kann in üblicher Weise, z.B. durch Druckminderventile, geschehen.

In der in der Fig.2 dargestellten Stellung der Membrandruckdose (1) mit dem Durchflußventil (18) ist der Druck in der Zuführleitung (15) für Wasser ausreichend hoch, um gegen die Wirkung der Feder (3) den Stößel (17) und damit den Ventilverschluß (7) von seinem Ventilsitz (7a) abzuheben. Entsprechend fließt eine bestimmte Luftmenge durch den Anschluß (16), die Kammer (4) und die Kammer (5) in den Anschluß (11) und zur Mischkammer (10). Dabei muß die Membrandruckdose (1) so ausgelegt werden, daß die Fläche der Membran (2), die Kraft der Feder (3) und deren Kennlinie die Hubbewegung des Ventilverschlusses (7) so steuern, daß bei einem bestimmten Druck in der Zuflußleitung (15), der auch einem bestimmten Durchflußwert für das Wasser entspricht, die zur Zerstäubung notwendige Luftmenge durch den Anschluß (16) in die Mischkammer (10) gelangen kann. Hier kann ein maximaler Durchfluß festgelegt werden. Der minimale Durchfluß bestimmt sich durch den Grenzwert des Druckes in der Leitung (15), bei dem das Ventil (7, 7a) geschlossen ist. Es kann dann nur noch Luft durch die Bypass-Öffnung (8) in einer bestimmten Menge zugeführt werden. Es wäre natürlich auch möglich, diese Bypass-Öffnung (8) wegzulassen, wenn der Durchfluß "Null" gewünscht ist.

Durch die Wahl der Querschnitte am Ventil und der vorher erwähnten Abmessungen der Membran (2) und der Feder (3), lassen sich bestimmte Kennlinien für das Mischungsverhältnis von Luft und Wasser erzeugen. Denkbar wäre es auch, die Teile (7, 7a und 8) austauschbar zu gestalten, so daß das in den Fig. 1 und 2 dargestellte mechanische Regelgerät auch an verschiedene Zweistoffdüsen mit verschiedenen Leistungscharakteristika angepaßt werden kann. Natürlich ist es auch möglich, anstelle von Membranen (2, 6) verschiebbare Kolben zu wählen.Die Ausführung mit Membranen ist aber einfacher. Mit der neuen Vorrichtung reicht es daher aus, über die Regelung des Druckes in der Zuflußleitung (15) die zu versprühende Wassermenge zu bestimmen, die bei vorgegebenen Abmessungen der Zweistoffdüse (20) mit steigendem Druck auch größer wird. Die Gefahr allerdings, daß bei sinkendem Wasserdruck die Luftmenge in unnötiger Weise zu groß wird, besteht nicht.

## Patentansprüche

1. Vorrichtung zur Zufuhr von Gas und Flüssigkeit zu einer Zweistoffdüse, insbesondere zur Zerstäubung von Flüssigkeiten mit je einer Zuführleitung (16, 15) für Gas und Flüssigkeit, wobei in der Zuführleitung (15) für die Flüssigkeit ein Druckaufnehmer (1) und in der Zuführleitung (16) für das Gas, ein steuerbares Durchflußventil (18), das vom Druckaufnehmer (1) betätigbar ist, angeordnet sind, dadurch gekennzeichnet, daß als Druckaufnehmer eine elastische Membran (2) vorgesehen ist, die mechanisch mit einem das Durchflußventil (18) steuernden Ventilstößel (17) verbunden ist.
